# EUROPEAN PATENT SPECIFICATION

(11) **EP 3 508 506 B1**
(45) Date of publication and mention of the grant of the patent: **18.01.2023**
(21) Application number: 18215062.3
(22) Date of filing: 21.12.2018
(51) Int. Cl.: C08B 15/06

(54) **METHOD FOR CELLULOSE DERIVATIZATION**
VERFAHREN ZUR DERIVATISIERUNG VON CELLULOSE
PROCÉDÉ DE DÉRIVATISATION DE CELLULOSE

(30) Priority: 29.12.2017 FI 20176199
(43) Date of publication of application: 10.07.2019
(73) Proprietor: Fortum OYJ, 02150 Espoo (FI)
(72) Inventor: TANNER, Reijo, 12240 Hikiä (FI); PASTINEN, Ossi, 02460 Kantvik (FI); LAAKSO, Simo, 20380 Turku (FI)
(74) Representative: Laine IP Oy

(56) References cited:
- EP-A1- 1 493 754
- WO-A1-2008/031525
- WO-A1-2012/120198
- N. M. ZABIVALOVA ET AL: "Preparation of mixed ethers by reaction of carboxymethyl cellulose with urea and their physicochemical properties", RUSSIAN JOURNAL OF APPLIED CHEMISTRY., vol. 81, no. 9, 1 September 2008 (2008-09-01), pages 1622-1629, XP55574381, US ISSN: 1070-4272, DOI: 10.1134/S1070427208090280

## Description

### Background of the invention

### Field of invention

The present invention concerns a method for production of cellulose derivatives, the method including the steps of activating the cellulose and reacting said activated cellulose with compounds having a diamine structure. The method is applicable to cellulose materials in any physical form or chain length.

### Description of related art

The cellulose carbamate process is one of the major technologies for making regenerated cellulose. In this process, cellulose is mixed in alkali milieu with urea and the mixture is treated with successive heating and cooling. Despite the fact that this traditional process still lacks larger commercialization, interest in its development is continuing.

The cellulose carbamate process is beneficial compared to the drawbacks of the major alternative processes, such as the Lyocell and viscose processes, due to either high process cost, limited applicability (material properties) of the obtained regenerated fibers or the necessity to use hazardous chemicals. In many respects the alternative processes cannot be considered environmentally friendly or sustainable.

The cellulose carbamate process has a significant advantage in that the carbamate derivative can be dried and stored and thus would represent a commercial product itself. Also the relatively harmless and low cost chemicals needed favor the view that further development of the carbamate technology will be continuing.

However, at its present state of development, the cellulose carbamate technology has its drawbacks. Publication US2005054848 implies that cellulose carbamate yields in the cellulose-urea reaction tend to be modest and purity of the product itself is typically insufficient. This manufacturing process also leads to gel forming of the formed carbamates, which further causes problems in subsequent fiber regeneration.

The above mentioned drawbacks are revealed also in publication CN104497151, describing a process including an impregnation of cellulose with a low concentration of urea, the cellulose urea mass ratio in the process being between 1:0.1-1:0.01. Thereafter, the cellulose-urea mixture is treated at relatively high temperatures, between 140-200 °C. The reaction conditions used in the publication are relatively conservative in the field, and result in low yields, while failing to prevent the formation of unwanted side products.

Attempts to improve the conversion efficiency have been considered in numerous publications over decades, but still the use of a surplus of urea is common practice. This, in turn, has consequences in recycling and separation of nonspecific and unreactive reaction products such as isocyanic acid, biuret and amine isocyanate.

Publication WO2015198218 presents yet another approach on how to improve carbamate yield and quality. The method is based on the idea that avoiding drying of pulps at any stages before reacting with urea will improve cellulose carbamate yields. Thereby the impregnation of urea into the pulp is enhanced and more cellulose hydroxyls become accessible by urea compared to dried pulps where structural packaging upon drying has occurred.

A further approach for improving carbamate yields is described in publication WO2002014375 where cellulose is subjected to consecutive urea treatments with increasing urea loads.

In the large number of other publications describing cellulose carbamate manufacturing, the process variations typically concern pretreatments of the pulps in alkali (CN104072622), organic solvent (WO2004046198) or with alkaline C1 - C4 alcohol solution (EP1078933). In a broader sense, these process variations result particularly in an increased heterogeneity of the product.

Thus, during recent decades, development of the cellulose carbamate process has been modest.

A major reason for the drawbacks of the current technology can be traced back to the fact that the reaction between cellulose and urea is a thermic splitting reaction of urea achieved by high temperature, which leads to formation of a large variety of unwanted by-products, thereby reducing cellulose carbamate yields and causing loss of material in the form of liberating ammonia.

Thus, there is a need for further development of urea-based derivatization of cellulose into products with tailored material properties that are applicable for wider scale regeneration methods.

Celluloses have also been derivatized without urea treatment, e.g. to form soluble celluloses, called "activated cellulose". This has been done, e.g. by derivatization of cellulose hydroxyls by phosphate moieties, as in publication WO2012120074.

Soluble celluloses, or activated celluloses, can be prepared also by rendering the cellulose starting material anionic by a strong alkaline treatment prior to dissolution/solvation, as in publication EP1509548. Publication EP1511773 also uses the term cellulose activation in the meaning that cellulose is reacted with urea in the presence of alkali.

Publication US6103885, in turn, describes the modification of polysaccharides in order to provide a hydrophobic product that is applicable to fatty amines.

Even the methods used to activate native cellulose by anionization of cellulose hydroxyls do not solve the problem of poor yields and abundant side product formation. The reaction between nonactivated or alkali-activated cellulose and urea is also kinetically unfavorable.

### Summary of the Invention

The present invention is defined by the features of the independent claims 1 and 13. Some specific embodiments are defined in the dependent claims.

According to a first aspect of the invention, there is provided a method of preparing cellulose derivatives by activating the hydroxyl groups of the cellulose and subsequently reacting the activated cellulose with one or more amine compounds. Optionally, the reaction with the amine can take place in the presence of one or more type of nonactivated carbohydrates.

According to a second aspect of the invention, there is provided a method of preparing cellulose derivatives, including a step of activating one or more of the hydroxyl groups of (the) cellulose starting material by insertion into the said hydroxyls acidic groups from organic or inorganic acids, such as carboxylic, phosphoric, or sulfuric acids, or halogenated acids .

According to a preferred aspect, there is provided a method of preparing cellulose derivatives by first activating the cellulose starting material to form carboxymethyl cellulose, and then reacting this derivative with one or more diamine compounds.

According to a third aspect of the invention, there is provided a cellulose derivative prepared using the method of the present invention.

The present invention is based on the finding that urea, and diamines in general, can react with cellulose more efficiently by elimination of kinetic hindrances in the reaction between cellulose and diamines.

Instead of using unspecific thermal splitting of diamines to initiate cellulose derivatization, as in the prior art aimed at synthesis of cellulose carbamates, it was discovered that a more specific chemical reaction route could be used for cellulose modification. According to this route, cellulose or at least one cellulosic component of the reaction mixture is subjected to two successive derivatizations, in which the reactivity of this component (e.g. the cellulose) is first increased, e.g. by acid reaction, followed by a reaction with a diamine compound.

Thus, the innovation concerns a process including at least the steps of increasing reactivity of cellulose by introducing acidic groups onto cellulose hydroxyls, reacting said derivatized cellulose with diamines and regeneration of the reaction product. The invention concerns also the products obtained using said manufacturing process.

The present invention provides a number of advantages over prior technologies, such as enabling cellulose derivatization at moderate temperatures and with low diamine loads.

Cellulose anionization, especially by carboxymethylation, improves cellulose solubility in water without alkalinization and increases its hydrophilicity, features which are beneficial for wetting of cellulose and fiber disintegration. Derivatization of said activated cellulose via a condensation reaction by using temperatures where thermal degradation of diamines do not occur, results in a specific chemical route to desired products, to shorter reaction times, and to lower reaction temperatures, thereby improving product yield and homogeneity, and making loss of diamines negligible due to their complete incorporation as part of the derivatized cellulose product.

These features and advantages provide an essential improvement in the mass balance of the process, while also eliminating the appearance of an ammonia side stream, which is unavoidable in present cellulose carbamate techniques.

Thus, the said benefits, partly interrelated, can overcome the extra costs of the primary carboxymethylation, or activation, of cellulose.

An additional advantage reached using the present invention is that the activated cellulose can be synthetized from celluloses with broad quality criteria with regard to polymer size, fibrillar state or presence of other lignocellulose components.

Further, the regenerated product obtained using the present process contains a higher degree of chemical bonds susceptible to biodegradability in contrast to cellulose carbamate made from native cellulose.

### Embodiments of the Invention

### Definitions

"Native cellulose" is an beta-1,4-glucose polymer of varying chain length and occasional 1,6 branches. It can be in a solid state, a solution or a dispersion, and can be defibrillated, even down to nanoscale. In the present context, the term thus encompasses also microcrystalline, microfibrillated, and nanocrystalline celluloses, in addition to the typical cellulose pulps. In the present invention, native cellulose may be used as a raw material for preparing activated cellulose, or it may be used in subsequent reactions as a mixture with the activated cellulose.

"Activated cellulose" means cellulose where the glucose units carry negative charge at least occasionally introduced by acidic chemicals (see the above list of acidic chemicals).

"Anionic cellulose" means cellulose, which carries negative charge obtained by alkalinization.

"Cellulose carbamate" is a derivative of cellulose or anionic cellulose obtained by contacting said celluloses with urea in neutral or alkaline reaction milieu at atmospheric pressure (NTP) and temperatures exceeding 130 °C.

"Carboxymethyl cellulose" ("CMC") means cellulose in which at least part of the hydroxyls have been derivatized by carboxymethyl groups. Carboxymethyl cellulose or its salt_may also be a commercial product independent of its method of manufacture.

The acidic reaction milieu used in the method is preferably obtained using one or more "acidic auxiliary agents", which can be inorganic or organic acids. The acidic milieu ensures that an acidic form of CMC is formed.

The present invention thus relates to a method of preparing cellulose derivatives the method comprising:
- activating the hydroxyl groups of native cellulose by a reaction using a compound which introduces negative charge, such as by adding a carboxylic or phosphoryl group.
- reacting said activated cellulose with one or more amine compounds in an aqueous milieu to provide a reaction mixture containing an aqueous phase and a water-insoluble organic phase,
- separating the aqueous phase from the water insoluble organic reaction mixture,
- recovering the product.

In a preferred embodiment, the method comprises:
- activating the native cellulose by a reaction with monochloro acetic acid to incorporate carboxymethyl moieties in the cellulose, through a reaction with the cellulosic hydroxyls, and
- reacting the thus obtained carboxymethyl cellulose derivative with one or more amine compounds.

The activated cellulose is not required to be completely pure or to have been obtained with an excellent yield. It can even be mixed separately with nonactivated cellulose, preferably native cellulose, or native celluloses containing either lignin, hemicellulose, their mixtures or of any other biopolymer consisting of carbohydrate or amino acid units before reacting with the amine compound, thus further decreasing the concentration of the activated cellulose. Typically, the ratio of nonactivated cellulose to carboxymethyl cellulose in such circumstances is 0.01- 9, preferably 0,025-5.

Before reaction with the amine(s), the activated cellulose is typically dissolved or hydrated in water to give a dry weight content in the range of 0.4 - 15 % (w/v), preferably followed by the addition of one or more acidifying agents to the aqueous mixture.

The one or more amine used in the crosslinking reaction is typically selected from diamines, preferably from urea or any alkane diamine, particularly preferred diamines being urea and hexane diamine. This diamine, or mixture of diamines, is preferably added to a content of 5-70 % of the mass of the activated cellulose, preferably 40-60 %.

Subsequently, the obtained cellulose-diamine reaction mixture is first allowed to react at a temperature within the range 35-60 °C, most suitably during a time period of 0.5-2 h, and then the reaction is continued, preferably at 100 - 110 °C by allowing evaporation of water and by continuing thereafter the reaction within the same temperature range until all the water has evaporated. After water washings of the organic water-insoluble material, the product is recovered.

Some of the reactions taking place when reacting the cellulose with the diamine at different temperature regions, according to the present invention, are listed below. Equations A (thermal) show the reactions taking place in a typical manufacture of cellulose carbamate, while equations B (condensation) disclose a few examples of reactions taking place in the method of the present invention.

### A. THERMAL REACTION OF DIAMINES

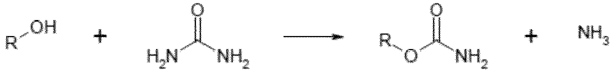

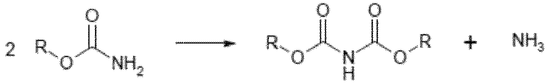

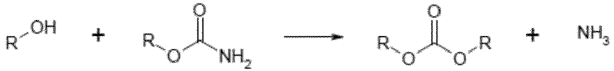

### B. CONDENSATION REACTION OF DIAMINES

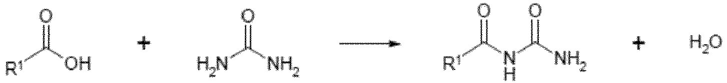

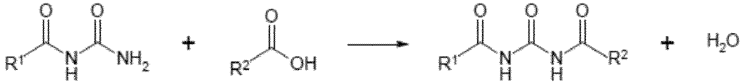

When studying the present context, the inventors made the surprising discovery that by increasing reactivity of cellulose by introducing reactive groups on cellulose hydroxyls, and by avoiding temperatures that would cause the thermal degradation of diamines, the reaction balance in the reaction between said cellulose and the diamines can be sufficiently transferred towards the reaction product. This facilitates a condensation reaction without the need of using high temperatures, where thermal breakdown of diamines occur. Thereby, the incorporation of the diamines into the structure of the cellulosic product is enabled. The introduction of a reactive element, such as a carboxymethyl group, onto the cellulose hydroxyls, specifies the balance equation towards the reaction product and accelerates the reaction.

In the invention, said reactive element is created in cellulose itself by a chemical derivatization, primarily created by reacting the C6 hydroxyls of the glucose unit. The reacting element subsequently acts in water as a proton donor and gives the cellulose an anionic character.

The thus obtained anionic group then serves as a dissolving element of cellulose in the reaction between activated cellulose and a diamine.

Anionic celluloses have been prepared and used for many applications by creating high alkalinity conditions to improve their solubility, but in said prior cases the anionic state of the cellulose hydroxyls has been obtained under strong alkaline conditions.

In order to avoid the use of strong alkali for cellulose activation, the cellulose of the present invention is typically activated by a reaction with an acid, such as a halogenated acid, to yield carboxymethyl cellulose (CMC) or another similar derivative. Said CMC is a cellulose derivative which is anionic, more water soluble and more reactive towards diamine, compared to regular underivatized cellulose.

Said activated cellulose together with any optional nonactivated cellulose is subsequently subjected to reaction with diamine compounds. The nonactivated cellulose is for example selected from native cellulose, fibrillated celluloses, micro- or nanocrystalline celluloses, bacterial cellulose, recycled cellulose, cotton, hemicellulose or a mixture of these.

Typically, the cellulose raw material is selected to provide an activated and derivatized cellulose that still contains lignin, hemicellulose, their degradation products or a mixture of those compounds. Such a cellulose starting material is preferably selected from any lignocellulose material or lignocellulose fractionation product.

In order to optimize the reaction between the activated cellulose and the diamine, the reaction is preferably carried out in aqueous acidic conditions, such as in an aqueous solution containing an acid, which preferably is a halogenated acid, such as monochloro acetic acid. Alternatively, the introduction of a suitable functional group to the OH groups of the cellulose can be carried out, which functional group can subsequently be reacted further to form a carboxylic acid. An example of such a functional group suitable for conversion is the epoxy group.

In the primary embodiment of the invention, the activated anionic cellulose is dissolved or hydrated in water to give a dry weight content in the range of 0.4-15 % (w/v). The mixture is supplemented with a diamine to a content, preferable corresponding to 5-70 % of the mass of the activated cellulose, most preferably 40-60 %.

The diamine is typically selected from urea or any alkane diamine or aromatic diamine. Particularly preferred diamines are urea and hexane diamine. The preferred diamine amount varies with the molar mass of the selected diamine. Thus, in case urea is the diamine to be used, its dry weight amount is preferably 35-65 % of the dry weight of the used activated cellulose. When using hexane diamine, having a higher molar mass than urea, the preferred amount is in the range of 45-80 % of the dry weight of activated cellulose.

The thus obtained cellulose-diamine mixture is agitated preferably at an elevated temperature, such as within the range of 35-60 °C, e.g. for 0.5-2 hours. From the resulting reaction mixture, the aqueous phase can be removed by any common separation method, typically by increasing the temperature, with the precaution that the temperature does not exceed 180 °C, in order to prevent initiation of thermal decomposition of diamines. For example, a temperature range of 80-180 °C can be used, particularly a maximum of 130 °C for urea.

In another embodiment of the invention the reaction between the activated cellulose and the diamine compound is carried out in acidic aqueous milieu, the acidification preferably being achieved by adding an acid.

The cellulose raw material used for preparing the activated cellulose can be obtained from whatever source and can vary with respect to several physical properties, such as degree of polymerization, defibrillation, crystallinity, and such cellulose materials can be used as mixtures to yield condensation products with varying properties.

Further, a mixture of native, chemically nonactivated cellulose and activated cellulose can be used in combination for reacting with diamine compounds. Then, the ratio of diamine to total cellulose amount is further reduced.

The reaction can also be carried out with a mixture of activated cellulose and hemicellulose as well as with a mixture of activated cellulose, nonactivated cellulose and hemicellulose.

Likewise, the diamine can be a mixture of diamines with any quantitative relations.

Each of the above embodiments includes the possibility to carry out the process in different modes, such as a batch-type process or as a continuous process, or in any combination of batch-type and continuous process steps.

During the reaction of diamines with activated cellulose or with mixtures of said chemically nonactivated celluloses, hemicelluloses and activated cellulose, the reaction mixture can be subjected to different physical treatments such as mixing, shearing or grinding, and the reaction mixture can be supplemented by chemically inert suspending or homogenizing agents, such as biologic gums, for instance xanthane gums, Arabic gum, guar gum, or agar.

The products obtained using the present method are biodegradable, and are obtained simply by the chemical crosslinking of cellulose-based or similar biological products.

The presence of carbohydrates and biological gums further increase the biodegradability of the products.

The method of the present innovation results in a product, typically consisting of solid, semisolid or hydrogel polymer network, the physical state of the products_depending on the components involved in the condensation reaction. The scope of the present invention thus also includes said product.

It is to be understood that the embodiments of the invention disclosed are not limited to the particular process steps or materials disclosed herein, but are extended to equivalents thereof that would be recognized by those ordinarily skilled in the art. It should also be understood that the terminology used herein is used for the purpose of describing particular embodiments only and is not intended to be limiting.

Reference throughout this specification to one embodiment means that a particular feature or characteristic described in connection with the embodiment, can be included also in other embodiments.

As used herein, a plurality of items, such as materials, may be presented in a common list for convenience. However, these lists should be construed as though each member of the list is individually identified as a separate and unique member. Thus, no individual member of such a list should be construed as a de facto equivalent of any other member of the same list solely based on their presentation in a common group.

Furthermore, the described features or characteristics may be combined in any suitable manner in one or more embodiments. In this description, numerous specific details are provided, such as temperatures and auxiliary agents, to provide a thorough understanding of embodiments of the invention. One skilled in the art will recognize, however, that the invention can be practiced without one or more of these specific details, or with one or more of these specific details being replaced with equivalent alternatives.

The following non-limiting examples are intended merely to illustrate the advantages obtained with the embodiments of the present invention. Numerous modifications can be made to these without departing from the principles and concepts of the invention. Accordingly, it is not intended that the invention be limited, except as by the claims set forth below.

### EXAMPLES

According to a general procedure, the starting materials are first mixed into water, whereafter the mixing is continued at a slightly increased temperature, such as 50°C. Subsequently, the mixture is transferred to an open container, where the temperature is increased to 100 °C or above, while continuing the stirring or mixing until the water has been removed. The product was washed twice, the liquid phase was removed and the solid product dried.

### Example 1 - Reaction between CMC and urea

Carboxymethyl cellulose (CMC, CPKelco Cekol 4000) was mixed in water in a ratio 10 g of CMC per 500 ml water to give dry weight content of 2 % (w/v). From this mixture a portion of 12,123 g, corresponding to 243 mg of CMC, was transferred into a 250-ml reaction chamber and supplemented with 136 mg urea (2.3 mM). This mixture was further supplemented with 0.2 ml 2M H₂SO₄, temperated to 45 °C and maintained at this temperature for 1 hour with mixing (180 rpm). Then, the mixture was dried overnight at 110 °C. The remaining dry matter was washed with 50 ml water at 50 °C while stirring for 2 hours (180 rpm). After repeating the washing, the liquid phase was removed and the solid product dried. Thereafter, the yield was 271 mg corresponding to 71 % of the dry matter initially supplied.

If all urea has reacted, the amount of water can be included in the yield, giving an additional yield of 4,6 mmol and 82 mg. This will provide a close to maximum total yield of nearly 94%.

### Example 2 - Reaction between CMC and 1,6-hexanediamine

Carboxymethyl cellulose CMC, CPKelco Cekol 4000) was mixed in water in a ratio 10 g of CMC per 500 ml water to give dry weight content of 2% (w/v). From this mixture an aliquot of 13.124 g corresponding to 263 mg of CMC, was transferred into a 250-ml reaction chamber and supplemented with 177 mg of 1.5 mM 1,6-hexanediamine. This mixture was supplemented with 0.2 ml 2M H2SO4 and temperated to 45 °C and maintained at this temperature for 1 hour with mixing (180 rpm). Then, the mixture was dried overnight at 110 °C. The remaining dry matter was washed with 50 ml water by stirring at 50 °C for 2 hours. After repeating the washing, the liquid phase was removed and the solid fraction dried. Thereafter, the dry matter yield was 237 mg corresponding to 58 % of the dry matter initially supplied.

### Comparative Example 3 - CMC condensation

The experiments carried out in examples land 2 were similarly repeated with the exception that the amine compounds (urea or 1,6-hexanediamine) were omitted. The CMC amount loaded was 13.87 g corresponding to dry matter of 250 mg. It appeared that only 4 % of loaded dry matter was left as solid dried material. The conclusion was that CMC itself does not yield solid material under the experimental conditions.

### Comparative Example 4 - Reaction of Example 2, omitting acid

In order to elucidate the role of acidification in the processes described in examples 1-3, 216 mg 1,6-hexanediamine and 20.006 g of CMC corresponding 360 mg CMC dry weight content were mixed in distilled water while omitting sulfuric acid addition. The dry matter yield was 225 mg corresponding to 40 % of the dry matter originally supplied to the reaction. The experiment demonstrates that in the presence of 1,6-hexanediamine, the reaction can be carried out without addition of a strong acid.

The role of the acidification step is merely to convert the salt form of the used commercial CMC into its acid form.

### Comparative Example 5 - Reaction of Example 1, omitting acid

A similar experiment as Example 4 was carried out except that 1,6-hexanediamine was replaced by urea. The reaction mixture contained 214 mg urea and 21.352 g CMC corresponding 384 mg CMC dry weight. The mixture was treated as in example 1. The dry mass yield was 6 %. Thus, the example indicates that with 1,6-hexanediamine the reaction proceeds without acidification of the mixture while in the presence of urea acidification is a prerequisite for obtaining solid cellulose derivative. Neither omitting of diamine compound from the reaction mixture produced solid cellulosic derivatives from CMC under the same experimental conditions.

### Example 6 - Reaction of Example 1, with addition of microcrystalline cellulose

Into a reaction mixture containing 0.99 g CMC and 0.60 g urea, in 100 ml of water, 0.30 ml 2 M H₂SO₄ was added. After mixing (180 rpm at 50°C), 1.00 g of microcrystalline cellulose (Emcocell 50 M) was added together with a sufficient amount of water to obtain a homogenous mixture. Then, the mixture was maintained stationary and open to surrounding atmosphere at 110°C until all added water and the water arising from the reaction was removed. The product was repeatedly washed with water at 50°C with mixing at 180 rpm until a stationary dry weight content of 2.40 g was established.

### Example 7 - Reaction of Example 1, with addition of hemicellulose

A mixture containing 2.06 g CMC, 1.03 g urea and 0.30 ml 2M H₂SO₄ was mixed in water. After mixing (180rpm, at 50°C), an aqueous solution of pine hemicellulose was introduced in an amount corresponding to dry weight content of 1.96 g, and the mixing was continued until a homogenous mixture was attained. Then, the mixture was maintained at a temperature of 110°C in open vial until all water, from whatever sources, was removed. At this point, the yield was 4.82 g. The product was washed with water at 50°C for 90-120 minutes, to remove the nonpolymerised dry weight material by dissolution in water. The remaining water-insoluble material was a typical hydrogel with water absorbing capabilities.

The tests showed that the rheological properties of the hydrogel can be afterwards modified by subjecting the material to a second chemical condensation process initiated by an additional CMC supplementation and by repeating the above steps of the method. This experiment brings evident that the hydrogel nature of the condensation polymers can be afterwards adjusted by reacting the preformed polymers with similar process steps as above, at 110°_{'}C, alternatively with altered relative concentrations of the reactants.

### Example 8 - Reaction of Example 1, with addition of starch (a non-cellulosic carbohydrate polymer)

Into a mixture containing 1.27 g CMC and 0.66 g urea, 0.30 ml 2M H₂SO₄ was added. After mixing (180rpm, at 50 °C), potato starch was added, in an amount corresponding to dry weight content of 1.0 g. Corn starch could also be used. The mixture was kept in an open reaction vessel at a temperature of 110 °C until all water was removed from the system. After water washings the yield of the water-insoluble and almost colorless product was 2.69 g. The water swelling and water absorbing capacity of the product was moderate and lower than in corresponding experiments made in the presence of hemicellulose.

### Example 9 - Reaction of Example 1, with addition of torn cellulose

Into a mixture containing 1.26 g CMC and 0.63 g urea, 0.30 ml 2 M H₂SO₄ was added. After mixing (180rpm, at 50 °C), torn birch cellulose was added to an amount corresponding to 1.70 g on dry weight basis. The mixture was incubated at 110 °C in an open vessel until all the water in the system was evaporated. At this point the yield was 3.51 g from which the water washings removed 0.60 g. The remaining material was pale, hard and partly translucent.

### Example 10 - Reaction of Example 1, with addition of suspended cellulose fibre mass

Into a mixture consisting of 0.56 g CMC and 0.85 g urea, 0.30 ml 2M H₂SO₄ was added. Upon mixing and homogenization (180rpm, at 50 °C) the mixture was supplemented with 3.5 g (dry weight) of cellulose as a suspended fiber mass obtained from newspaper (UPM). The mixture was allowed to react in an oven at 120 °C for 12 hours on the surface of an aluminum foil open to surrounding atmosphere. The product formed was a thin film, which was strongly attached to the surface of the foil. The product was detached upon water washing, giving a dry weight, after drying, of 4.0 g.

### Example 11 - Reaction of Example 1, with addition of microfibrillated cellulose as a hydrogel

An acidic aqueous mixture was first formed in 150 ml water containing 2.50 g CMC, 2.00 g urea and 0.50 ml 2M H₂SO₄. This mixture was mixed at 180 rpm and 50 °C for 60 min. The mixed reactants were supplemented with microfibrillar birch cellulose as a hydrogel suspension by an amount corresponding 0.30 g dry weight. The mixture was placed on aluminium foil and allowed to react without further mixing in an oven at 120 °C for 12 hours. A thin film, tightly adhered to the aluminum surface, was formed, which was, however, detachable by water washing. The formed film was almost colorless, uniform and weakly translucent.

### Example 12 - Reaction of Example 1, with addition of milled birch wood

A mixture was formed in 150 ml water containing 2.07 g CMC, 1.38 g urea and 0.50 ml 2 M H₂SO₄ supplemented with 5.67 g (dry weight) milled birch wood sieved through 1 mm sieve. The reaction was carried out as described in Example 11. The product was a membrane in which the wood fibers formed an evenly distributed network, where the CMC and the amine form a binding material between the fibres. The product neither dissolved nor decomposes (or loses the ordered fibrillary organization) when immersed in water.

### Example 13 - Reaction of Example 1, with addition of lignin

First a reaction mixture was formed in 50 ml water by mixing 0.94 g CMC, 0.62 g urea and 0.50 ml H₂SO₄. After mixing at 180 rpm and 50 °C for 60 min, finely ground oat lignin powder, 4.11 g by dry weight, was added while continuing the mixing under the same conditions. The mixture was allowed to react stationary at 110 °C for 12 hours. After water washings the insoluble material was dried giving a dry weight yield of 4.56 g.

### Example 14 - Reaction of Example 1, with addition of cotton

An acidic aqueous mixture was first formed in 60 ml water containing 1.1 g CMC, 0.6 g urea and cotton fibers 0.5 g. In this mixture was added 0.3 ml 2M H₂SO₄, by mixing at 180 rpm and 50 °C for 60 min. The mixture was placed on aluminium foil and allowed to react without further mixing in an oven at 120 °C for 12 hours. A thin film, tightly adhered to the aluminum surface, was formed, which was, however, detachable by water washing. The formed film was almost colorless, uniform and very strong.

## Claims

1. A method of preparing cellulose derivatives the method comprising:
- providing a compound having the hydroxyl groups of native cellulose activated by a reaction using a compound containing an acidic substituent,
- reacting said activated cellulose with one or more amine compounds in an aqueous milieu, at a temperature within the range 35-60 °C, thereby forming an aqueous phase and a remaining organic reaction mixture,
- separating the aqueous phase from the organic reaction mixture,
- recovering the product.

2. The method according to claim 1, wherein the reactive substituent is a carboxylic acid or a halogenated acid group.

3. The method according to claim 1 or 2,the method comprising:
- providing a compound containing a reactive substituents by activating native cellulose, preferably by a reaction with monochloro acetic acid, to incorporate carboxymethyl moieties in the cellulose, through a reaction with the cellulosic hydroxyls, and
- reacting the thus obtained carboxymethyl cellulose derivative with one or more amine compounds.

4. The method according to any of claims 1-3, wherein the activated cellulose is mixed with nonactivated cellulose, preferably native cellulose, before reacting with the amine compound.

5. The method according to claim 4, wherein the ratio of nonactivated cellulose to carboxymethyl cellulose is 0.01- 9 , preferably 0.025-5.

6. The method according to any of claims 1-5, wherein the activated cellulose is hydrated with aqueous auxiliary agent to give a dry weight content in the range of 0.2 - 15 % (w/v), before reaction with the amine.

7. The method according to any of claims 1-6, wherein one or more acidifying agents are added to the aqueous phase.

8. The method according to any of claims 1-7, wherein the one or more amines is selected from any diamine or triamine, particularly preferred diamines being urea and hexane diamine.

9. The method according to any of claims 1-8, wherein amine is added to a content of 0.5-70 % of the mass of the activated cellulose, preferably 4.0-50 %.

10. The method according to any of claims 1-9, wherein the cellulose-amine reaction mixture is first allowed to react at a temperature within the range 35-60 °C , and is then reheated to a temperature within the range of 80-180 °C, particularly a maximum of 130 °C for urea, causing among others evaporation of water.

11. The method according to any of claims 1-10, wherein the cellulose-amine reaction mixture is agitated at a desired reaction temperature during a time period of 0.5-2 h.

12. The method according to any of claims 1-11, wherein the process, or at least some of its steps, is carried out batch-wise and/or continuously.

13. A cellulose product, **characterized in that** it has been prepared using the method according to any of claims 1-12.

14. The cellulose product according to claim 13, which is cross-linked.

15. The cellulose product according to claim 13 or 14, which is insoluble in water.

## Patentansprüche

1. Verfahren zur Herstellung von Cellulose-Derivaten, wobei das Verfahren umfasst:
- Bereitstellen einer Verbindung, die die Hydroxylgruppen von nativer Cellulose aufweist, die durch eine Reaktion aktiviert werden, die eine Verbindung verwendet, die einen sauren Substituenten enthält,
- Reagieren der aktivierten Cellulose mit einer oder mehreren Aminverbindungen in einem wässrigen Milieu, bei einer Temperatur innerhalb des Bereichs von 35-60 °C, wodurch eine wässrige Phase und ein verbleibendes organisches Reaktionsgemisch gebildet werden,
- Abscheiden der wässrigen Phase von dem organischen Reaktionsgemisch,
- Erhalten des Produkts.

2. Verfahren nach Anspruch 1, wobei der reaktive Substituent eine Carboxylsäure oder eine Halogensäuregruppe ist.

3. Verfahren nach Anspruch 1 oder 2, wobei das Verfahren umfasst:
- Bereitstellen einer Verbindung, die reaktive Substituenten enthält, durch Aktivieren nativer Cellulose, vorzugsweise durch eine Reaktion mit Monochloressigsäure, um Carboxymethyl-Anteile durch eine Reaktion mit Cellulose-Hydroxylgruppen in die Cellulose zu integrieren, und
- Reagieren des so erhaltenen Carboxymethyl-Cellulose-Derivats mit einer oder mehreren Aminverbindungen.

4. Verfahren nach einem der Ansprüche 1-3, wobei die aktivierte Cellulose mit nicht aktivierter Cellulose, vorzugsweise nativer Cellulose, vermischt wird, bevor sie mit der Aminverbindung reagiert.

5. Verfahren nach Anspruch 4, wobei das Verhältnis von nicht aktivierter Cellulose zu Carboxymethyl-Cellulose 0,01-9, vorzugsweise 0,025-5 beträgt.

6. Verfahren nach einem der Ansprüche 1-5, wobei die aktivierte Cellulose mit einem wässrigen Hilfsstoff hydriert wird, um einen Trockenstoffgehalt im Bereich von 0,2 - 15 % (w/v) vor der Reaktion mit dem Amin zu ergeben.

7. Verfahren nach einem der Ansprüche 1-6, wobei ein oder mehrere Säuerungsmittel zur wässrigen Phase beigegeben werden.

8. Verfahren nach einem der Ansprüche 1-7, wobei das eine oder mehrere Amine aus einem Diamin oder Triamin ausgewählt wird, wobei besonders bevorzugte Diamine Harnstoff und Hexandiamin sind.

9. Verfahren nach einem der Ansprüche 1-8, wobei Amin zu einem Gehalt von 0,5-70 % der Masse der aktivierten Cellulose, vorzugsweise 4,0-50 %, beigegeben wird.

10. Verfahren nach einem der Ansprüche 1-9, wobei dem Cellulose-Amin-Reaktionsgemisch zuerst erlaubt wird, bei einer Temperatur innerhalb eines Bereichs von 35-60 °C zu reagieren, und danach erneut auf eine Temperatur innerhalb des Bereichs von 80-180 °C, insbesondere auf ein Maximum von 130 °C für Harnstoff erwärmt wird, wodurch unter anderem das Verdampfen von Wasser bewirkt wird.

11. Verfahren nach einem der Ansprüche 1-10, wobei das Cellulose-Amin-Reaktionsgemisch bei einer gewünschten Temperatur während eines Zeitraumes von 0,5-2 Std. geschüttelt wird.

12. Verfahren nach einem der Ansprüche 1-11, wobei der Prozess, oder mindestens einige seiner Schritte, chargenweise und/oder kontinuierlich ausgeführt wird/werden.

13. Cellulose-Produkt, **dadurch gekennzeichnet, dass** es durch Verwenden des Verfahrens nach einem der Ansprüche 1-12 hergestellt worden ist.

14. Cellulose-Produkt nach Anspruch 13, welches vernetzt ist.

15. Cellulose-Produkt nach Anspruch 13 oder 14, welches in Wasser unlöslich ist.

## Revendications

1. Procédé de préparation de dérivés de cellulose, le procédé comprenant les étapes consistant à :
- fournir un composé présentant les groupes hydroxyle d'une cellulose native activés par une réaction en utilisant un composé contenant un substituant acide,
- faire réagir ladite cellulose activée avec un ou plusieurs composés aminés dans un milieu aqueux, à une température dans la plage de 35-60 °C, pour ainsi former une phase aqueuse et un mélange réactionnel organique restant,
- séparer la phase aqueuse du mélange réactionnel organique,
- récupérer le produit.

2. Procédé selon la revendication 1, dans lequel le substituant réactif est un acide carboxylique ou un groupe acide halogéné.

3. Procédé selon la revendication 1 ou 2, le procédé comprenant les étapes consistant à :
- fournir un composé contenant des substituants réactifs en activant une cellulose native, de préférence par une réaction avec un acide monochloroacétique, pour incorporer des fragments carboxyméthyle dans la cellulose, par l'intermédiaire d'une réaction avec les hydroxyles cellulosiques, et
- faire réagir le dérivé de carboxyméthylcellulose ainsi obtenu avec un ou plusieurs composés aminés.

4. Procédé selon l'une quelconque des revendications 1-3, dans lequel la cellulose activée est mélangée avec une cellulose non activée, de préférence une cellulose native, avant la réaction avec le composé aminé.

5. Procédé selon la revendication 4, dans lequel le rapport de la cellulose non activée par rapport à la carboxyméthylcellulose est de 0,01-9, de préférence de 0,025-5.

6. Procédé selon l'une quelconque des revendications 1-5, dans lequel la cellulose activée est hydratée avec un agent auxiliaire aqueux pour donner une teneur en poids sec dans la plage de 0,2-15 % (en p/v), avant la réaction avec l'amine.

7. Procédé selon l'une quelconque des revendications 1-6, dans lequel un ou plusieurs agents acidifiants sont ajoutés à la phase aqueuse.

8. Procédé selon l'une quelconque des revendications 1-7, dans lequel les une ou plusieurs amines sont sélectionnées parmi n'importe quelle diamine ou triamine, les diamines particulièrement préférées étant l'urée et l'hexanediamine.

9. Procédé selon l'une quelconque des revendications 1-8, dans lequel une amine est ajoutée à une teneur de 0,5-70 % de la masse de la cellulose activée, de préférence de 4,0-50 %.

10. Procédé selon l'une quelconque des revendications 1-9, dans lequel le mélange réactionnel cellulose-amine est d'abord laissé réagir à une température dans la plage de 35-60 °C, et est ensuite réchauffé à une température dans la plage de 80-180 °C, en particulier à un maximum de 130 °C pour l'urée, ce qui provoque entre autres l'évaporation de l'eau.

11. Procédé selon l'une quelconque des revendications 1-10, dans lequel le mélange réactionnel cellulose-amine est agité à une température réactionnelle souhaitée pendant une période de temps de 0,5-2 h.

12. Procédé selon l'une quelconque des revendications 1-11, dans lequel le procédé, ou au moins certaines de ses étapes, est effectué par lots et/ou en continu.

13. Produit cellulosique, **caractérisé en ce qu'**il a été préparé en utilisant le procédé selon l'une quelconque des revendications 1-12.

14. Produit cellulosique selon la revendication 13, qui est réticulé.

15. Produit cellulosique selon la revendication 13 ou 14, qui est insoluble dans l'eau.
